# EUROPEAN PATENT APPLICATION

(11) **EP 4 794 155 A1**
(43) Date of publication of application: **19.08.2026**
(21) Application number: 24878907.5
(22) Date of filing: 11.10.2024
(51) Int. Cl.: H02J 3/24

(54) **ENERGY-STORAGE POWER-CONVERSION SERIES COMPENSATION SYSTEM AND STABILITY ANALYSIS METHOD THEREFOR, AND DAMPING CONTROLLER**

(30) Priority: 19.10.2023 CN 202311363676
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: YUAN, Xiaotian, Shanghai 200241 (CN); LIANG, Liliuyuan, Shanghai 200241 (CN); TU, Qing, Shanghai 200241 (CN); LIN, Hongfei, Shanghai 200241 (CN); XIE, Yi, Shanghai 200241 (CN); WEI, Chao, Shanghai 200241 (CN); ZONG, Yanyun, Shanghai 200241 (CN); PENG, Hao, Shanghai 200241 (CN); YU, Dongxu, Shanghai 200241 (CN); LU, Yanhua, Shanghai 200241 (CN)
(74) Representative: Gong, Jinping
(86) International application number: PCT/CN2024/124228
(87) International publication number: WO 2025/082263

(57) **Abstract**

This application relates to an energy storage converter series compensation system and stability analysis method thereof, a damping controller, and an energy storage system, capable of acquiring a voltage signal of a capacitor disposed between an energy storage battery pack and a converter of the energy storage converter series compensation system, and determining, based on the voltage signal, whether an activation condition is satisfied. When the activation condition is satisfied, an adaptive adjustment filter is activated to enable the damping controller to participate in the operation of the energy storage converter series compensation system. A voltage synchronization controller determines, based on a sub-synchronous frequency band voltage signal output by the adaptive adjustment filter and an initial voltage signal, an output phase angle signal required for a pulse width modulation signal to control operation of the converter.

## Description

### CROSS-REFERENCE

This application claims priority to Chinese Patent Application No. 202311363676.2, filed on October 19, 2023 and entitled "ENERGY STORAGE CONVERTER SERIES COMPENSATION SYSTEM AND STABILITY ANALYSIS METHOD THEREOF, AND DAMPING CONTROLLER," which is incorporated herein by reference in its entirety.

### TECHNICAL FIELD

This application relates to the technical field of electrical energy transmission, and in particular to an energy storage converter series compensation system and stability analysis method thereof, a damping controller, and an energy storage system.

### BACKGROUND

With the development of science and technology, energy storage systems, as an important resource for power system regulation, provide significant convenience for daily production and living. The energy storage battery pack of an energy storage system is generally connected to an alternating current grid through an energy storage converter series compensation system. Through the converter in the energy storage converter series compensation system, the stored energy is converted into electrical energy suitable for the requirements of the grid and supplied to the electrical loads in the alternating current grid.

Among various types of converters, grid-forming converters have been increasingly applied due to their ability to enhance the capability of the energy storage system to provide inertia and damping support to the alternating current grid. However, in related technologies, the stable operation capability of grid-forming converters is relatively poor.

### SUMMARY

In view of this, it is necessary to provide an energy storage converter series compensation system and stability analysis method thereof, a damping controller, and an energy storage system to improve the stable operation capability of grid-forming converters.

A damping controller includes a sub-synchronous frequency tracker, an adaptive adjustment filter, and a voltage synchronization controller. The sub-synchronous frequency tracker is configured to acquire a voltage signal of a capacitor disposed between an energy storage battery pack and a converter of an energy storage converter series compensation system, and to activate the adaptive adjustment filter when it is determined based on the voltage signal that an activation condition is satisfied. The adaptive adjustment filter is connected to the sub-synchronous frequency tracker, and configured to receive the voltage signal and to perform filtering adjustment on the voltage signal when activated, outputting a sub-synchronous frequency band voltage signal. The voltage synchronization controller is connected to the adaptive adjustment filter and the converter, and configured to receive an initial voltage signal and to determine an output phase angle signal based on the sub-synchronous frequency band voltage signal and the initial voltage signal. The output phase angle signal is used to generate a pulse width modulation signal to control operation of the converter.

The above damping controller can acquire the voltage signal of the capacitor disposed between the energy storage battery pack and the converter of the energy storage converter series compensation system, and based on this, determine whether the activation condition is satisfied. When the activation condition is satisfied, the adaptive adjustment filter is activated to enable the damping controller to participate in the operation of the energy storage converter series compensation system. Subsequently, the voltage synchronization controller determines, based on the sub-synchronous frequency band voltage signal output by the adaptive adjustment filter and the initial voltage signal, the output phase angle signal required for the pulse width modulation signal to control operation of the converter. Through the above solution, the damping controller can be engaged in the operation of the energy storage converter series compensation system when the activation condition is satisfied, enhancing the damping level of the unstable sub-synchronous resonance mode, correcting the original negative damping mode to a positive damping mode, and improving the stable operation capability of the grid-forming converter.

In some embodiments, the sub-synchronous frequency tracker includes a collection module, a fast Fourier analysis module, and a decision module connected in sequence, the collection module being configured to acquire the voltage signal, and the decision module being further connected to the adaptive adjustment filter.

In the above solution, the sub-synchronous frequency tracker includes a collection module, a fast Fourier analysis module, and a decision module. By collecting the voltage signal and performing fast Fourier analysis, the analysis results are used to determine whether to activate the adaptive adjustment filter, achieving high tracking accuracy.

In some embodiments, the adaptive adjustment filter includes a low-pass filter, a high-pass filter, a band-pass filter, and a gain amplifier connected in sequence. The low-pass filter is configured to receive the voltage signal, the band-pass filter is further connected to the sub-synchronous frequency tracker, and the gain amplifier is further connected to the voltage synchronization controller.

In the above solution, the adaptive adjustment filter performs low-pass filtering, high-pass filtering, band-pass filtering, and gain processing on the voltage signal, thereby accurately selecting the voltage signal in the sub-synchronous frequency band, improving the accuracy of damping suppression.

In some embodiments, the voltage synchronization controller includes a first subtractor, a second subtractor, a droop controller, a first adder, a multiplier, and an integrator connected in sequence. The first subtractor is further configured to receive the voltage signal, the second subtractor is further connected to the adaptive adjustment filter, the first subtractor is further configured to receive the initial voltage signal, the first adder is further configured to receive a system rated frequency, and the multiplier is further configured to receive a system angular frequency reference value.

In the above solution, the voltage synchronization controller can perform synchronization control by combining the system rated frequency, the system angular frequency reference value, the initial voltage signal, the voltage signal, and the sub-synchronous frequency band voltage signal, outputting the output phase angle signal required by the converter for damping suppression, with relatively high voltage synchronization control reliability.

In some embodiments, satisfying the activation condition includes: the collected signal frequency satisfying a preset frequency condition, and the collected signal amplitude satisfying a preset amplitude condition; where the collected signal frequency and the collected signal amplitude are determined by performing online Fourier analysis on the voltage signal.

In the above solution, by verifying whether the collected signal frequency and the collected signal amplitude satisfy the preset frequency condition and the preset amplitude condition, respectively, the activation condition for the adaptive adjustment filter is determined, improving the accuracy of activation judgment through validation in both frequency and amplitude dimensions.

In some embodiments, the collected signal frequency satisfying the preset frequency condition includes: the collected signal frequency being greater than or equal to a lower limit value of a set band-pass frequency and less than or equal to an upper limit value of the set band-pass frequency.

In the above solution, when the collected signal frequency is between the upper limit value and lower limit value of the set band-pass frequency, it is considered to satisfy the preset frequency condition, achieving damping suppression within the set band-pass frequency range, thereby improving the accuracy of damping suppression.

And/or, in some embodiments, the collected signal amplitude satisfying the preset amplitude condition includes: a ratio of the collected signal amplitude to a nominal amplitude being greater than or equal to a set threshold.

In the above solution, when the ratio of the collected signal amplitude to the nominal amplitude is greater than or equal to the set threshold, it is considered to satisfy the preset amplitude condition, achieving damping suppression when the collected signal amplitude is relatively large, thereby improving the accuracy of damping suppression.

An energy storage converter series compensation system includes a capacitor, a converter, a series compensation circuit, and the above damping controller. A first end and a second end of the capacitor are both used to connect to an energy storage battery pack, the first end of the capacitor is further connected to the converter, the second end of the capacitor is further connected to the converter, the converter is further connected to the damping controller and the series compensation circuit, and the series compensation circuit is used to connect to an alternating current grid.

The above energy storage converter series compensation system incorporates the damping controller at the converter, and the damping controller can alter the damping of the energy storage converter series compensation system in the event of sub-synchronous resonance instability, improving the operational stability of the energy storage converter series compensation system.

In some embodiments, the energy storage converter series compensation system further includes a reactive power control apparatus, a voltage reference apparatus, and a pulse width generator. The reactive power control apparatus and the damping controller are both connected to the voltage reference apparatus, and the pulse width generator is connected to both the voltage reference apparatus and the converter.

In the above solution, by combining the output phase angle signal and the modulation ratio reference value generated by the reactive power control apparatus, the voltage reference apparatus and the pulse width generator generate the corresponding pulse width modulation signal for the converter, improving the operational reliability of the converter.

In some embodiments, the reactive power control apparatus includes a reactive power control module, a second adder, and an auxiliary damping controller. The reactive power control module and the auxiliary damping controller are both connected to the second adder, and the second adder is connected to the voltage reference apparatus.

In the above solution, by combining the modulation ratio reference value generated by the reactive power control module and the modulation ratio variation value generated by the auxiliary damping controller through addition, the actual modulation ratio reference value is obtained, controlling the generation of the pulse width modulation signal and effectively improving the accuracy of the modulation ratio reference value.

In some embodiments, the energy storage converter series compensation system further includes a first inductor and a first capacitor. A first end of the first inductor is connected to the converter, a second end of the first inductor is connected to a first end of the first capacitor and the series compensation circuit, and a second end of the first capacitor is grounded.

In the above solution, the converter is connected to the series compensation circuit through the first inductor and the first capacitor, ensuring more stable and reliable voltage transmission through the first inductor and the first capacitor, and further improving the operational reliability of the energy storage converter series compensation system.

In some embodiments, the series compensation circuit includes a second inductor and a second capacitor connected in series. An end of the second inductor away from the second capacitor is further connected to the converter, and an end of the second capacitor away from the second inductor is used to connect to the alternating current grid.

In the above solution, the series compensation circuit includes a second inductor and a second capacitor, meaning that a series compensation circuit is constructed using the second inductor and the second capacitor, improving the power factor of the energy storage converter series compensation system, stabilizing the energy storage converter series compensation system, and reducing voltage fluctuations.

A stability analysis method of the energy storage converter series compensation system includes: in a case that the adaptive adjustment filter is not activated, acquiring an overall state-space model of the energy storage converter series compensation system; where the overall state-space model is determined by linearizing based on an operating condition model, and the operating condition model is constructed based on modal analysis; and performing characteristic value calculation based on the overall state-space model to determine stability analysis results.

In the above solution, when the adaptive adjustment filter is not activated and the voltage synchronization controller does not receive the sub-synchronous frequency band voltage signal, modal analysis is performed on the energy storage converter series compensation system to construct the overall state-space model. By performing characteristic value calculation on the overall state-space model, the stability analysis of the energy storage converter series compensation system is achieved, obtaining stability analysis results, thereby providing data support for the theoretical analysis of sub-synchronous resonance in the energy storage converter series compensation system constructed with grid-forming converters.

In some embodiments, the operating condition model includes at least one of a capacitor dynamic model, a voltage droop control model, a converter virtual power angle model, a converter alternating current/direct current voltage model, a converter dynamic model, a series compensation model, and a series compensation capacitor transient differential model.

In the above solution, one or more of the capacitor dynamic model, voltage droop control model, converter virtual power angle model, converter alternating current/direct current voltage model, converter dynamic model, series compensation model, and series compensation capacitor transient differential model are used for linearization processing to determine the overall state-space model, improving the accuracy of the overall state-space model.

In some embodiments, the performing characteristic value calculation based on the overall state-space model to determine stability analysis results includes: performing characteristic value calculation based on the overall state-space model to determine characteristic values; performing calculation based on the characteristic values to determine an oscillation frequency and a damping ratio; and determining the stability analysis results based on the oscillation frequency and damping ratio.

In the above solution, the characteristic values are obtained by performing characteristic value calculation based on the overall state-space model, and the oscillation frequency and damping ratio calculated from the characteristic values are used to verify the occurrence of sub-synchronous resonance phenomenon in the energy storage converter series compensation system, offering advantages of high accuracy in stability analysis.

In some embodiments, the determining the stability analysis results based on the oscillation frequency and damping ratio includes: determining, based on the oscillation frequency and damping ratio, a target oscillation frequency and a target damping ratio when the energy storage converter series compensation system becomes unstable; and performing participation factor analysis based on the target oscillation frequency and target damping ratio to determine dominant parameters causing instability.

In the above solution, based on the oscillation frequency and damping ratio obtained through calculation for each characteristic, the target oscillation frequency and target damping ratio when the energy storage converter series compensation system experiences sub-synchronous resonance (that is, instability) are identified. Further participation factor analysis is conducted to identify the main factors causing sub-synchronous resonance, providing a theoretical basis for the construction of the damping controller.

This application further provides an energy storage system, including an energy storage battery pack and the above energy storage converter series compensation system.

### BRIEF DESCRIPTION OF DRAWINGS

To more clearly illustrate the technical solutions of the embodiments of this application, the drawings required for use in the embodiments of this application are briefly introduced below. Obviously, the drawings described below are only some embodiments of this application, and those skilled in the art can obtain other drawings based on these drawings without creative effort. In the drawings:
FIG. 1 is a schematic structural diagram of a damping controller in some embodiments of this application;
FIG. 2 is a schematic structural diagram of a damping controller in other embodiments of this application;
FIG. 3 is a schematic structural diagram of an energy storage converter series compensation system in some embodiments of this application;
FIG. 4 is a schematic flowchart of a stability analysis method of an energy storage converter series compensation system in some embodiments of this application;
FIG. 5 is a schematic flowchart of stability analysis in some embodiments of this application;
FIG. 6 is a schematic flowchart of stability analysis in other embodiments of this application;
FIG. 7 is a schematic diagram of participation factors in some embodiments of this application;
FIG. 8 is a schematic diagram of root locus analysis in some embodiments of this application;
FIG. 9 is a schematic diagram of dynamic response of a damping controller in some embodiments of this application; and
FIG. 10 is a schematic diagram of verification waveforms for different parameters of a damping controller in some embodiments of this application.

### Description of reference numerals in the drawings:

110. sub-synchronous frequency tracker, 120. adaptive adjustment filter, 130. voltage synchronization controller; 111. collection module, 113. fast Fourier analysis module, 115. decision module; 121. low-pass filter, 123. high-pass filter, 125. band-pass filter, 127. gain amplifier; 131. first subtractor, 132. second subtractor, 133. droop controller, 134. first adder, 135. multiplier, 136. integrator; 310. energy storage battery pack, 320. converter, 330. series compensation circuit, 340. damping controller; 410. reactive power control apparatus, 420. voltage reference apparatus, 430. pulse width generator; 411. reactive power control module, 412. auxiliary damping controller, and 413. second adder.

### DESCRIPTION OF EMBODIMENTS

The embodiments of the technical solutions of this application will be described in detail below with reference to the accompanying drawings. The following embodiments are only used to illustrate the technical solutions of this application more clearly and are merely exemplary, not intended to limit the scope of protection of this application.

Unless otherwise defined, all technical and scientific terms used herein have the same meaning as commonly understood by those skilled in the technical field of this application; the terms used herein are for the purpose of describing specific embodiments only and are not intended to limit this application; and the terms "include" and "have" and any variations thereof in the description, claims, and the above description of the drawings of this application are intended to cover non-exclusive inclusion.

Reference to "embodiment" herein means that a particular feature, structure, or characteristic described in connection with the embodiment may be included in at least one embodiment of this application. The appearance of the phrase in various places in the specification does not necessarily refer to the same embodiment, nor is it a separate or alternative embodiment mutually exclusive with other embodiments. Those skilled in the art explicitly and implicitly understand that the embodiments described herein can be combined with other embodiments.

In the description of the embodiments of this application, the term "and/or" merely describes an association relationship between associated objects, indicating that three relationships may exist, for example, A and/or B may indicate: A alone, A and B simultaneously, and B alone. Additionally, the character "/" herein generally indicates an "or" relationship between the associated objects.

In the description of the embodiments of this application, the term "multiple" refers to two or more (including two), similarly, "multiple groups" refers to two or more groups (including two groups), and "multiple pieces" refers to two or more pieces (including two pieces).

In the description of the embodiments of this application, unless explicitly specified and limited otherwise, technical terms such as "mounting," "join," "connecting," and "fixing" should be understood in a broad sense, for example, it may be a fixed connection, a detachable connection, or an integral connection; it may be a mechanical connection or an electrical connection; it may be a direct connection or an indirect connection through an intermediate medium, or it may be an internal communication or interaction between two elements. Those skilled in the art can understand the specific meanings of the above terms in the embodiments of this application based on specific circumstances.

Currently, from the perspective of market development, the grid-connected operation of energy storage systems with alternating current grids has been widely applied. Sub-synchronous oscillation (Sub-Synchronous Oscillation, SSO) in power systems is an unstable condition caused by energy exchange at one or more specific frequencies between generation units (synchronous machines, renewable energy units) and the alternating current/direct current grid, with the specific frequency typically below the synchronous frequency of 50 Hz (hertz) of the grid. Early sub-synchronous oscillation is mainly caused by the interaction between the shaft system of synchronous machines and the series compensation of the grid, where the SSO instability is due to the complementary relationship between the natural torsional frequency of the synchronous machine shaft system and the resonant frequency of the series-compensated line, thus also referred to as sub-synchronous resonance (Sub-Synchronous Resonance, SSR). However, with the large-scale integration of renewable energy and extensive use of power electronic equipment, more SSO instability incidents dominated by renewable energy have been observed in practical engineering, with mechanisms different from the conventional SSR dominated by synchronous machine shaft systems, exhibiting more novel oscillation characteristics and manifestations.

Under the control of typical grid-following (Grid-following, GFL) converters, the mechanism of sub-synchronous oscillation in energy storage systems has been relatively well studied, and it is generally believed that grid-following converters do not couple with the series compensation circuit on the alternating current grid side to cause SSR (Sub-Synchronous Resonance, sub-synchronous resonance) phenomenon. Most studies are based on the SSO stability analysis of grid-following converters.

However, with the development of power systems, a grid-forming (Grid-forming, GFM) converter based on DC voltage synchronization control (DC Voltage Synchronization Control, DVSC) has been proposed. Studies have found that although GFM converters can enhance the ability of the energy storage system to provide inertia and damping support to the alternating current grid, the stable operation capability of the GFM converters is relatively poor compared to GFL converters.

To mitigate the issue of relatively poor stable operation capability of GFM converters, considering the different operating modes of GFM converters and GFL converters, in a case that an energy storage converter series compensation system incorporates a GFM converter, it is verified whether SSR instability phenomenon occurs in the energy storage converter series compensation system. In-depth studies have revealed that, unlike GFL converter-based energy storage converter series compensation systems, GFM converter-based energy storage converter series compensation systems indeed exhibit SSR instability phenomenon, and the SSR instability phenomenon causes relatively poor stable operation capability of the GFM converters.

Based on the above considerations, in the embodiments of this application, a damping controller is designed, integrated into a GFM converter, which acquires the voltage signal of a capacitor disposed between the energy storage battery pack and the converter of the energy storage converter series compensation system and determines, based on this signal, whether an activation condition is satisfied. When the activation condition is satisfied, the adaptive adjustment filter is activated to enable the damping controller to participate in the operation of the energy storage converter series compensation system. Subsequently, the voltage synchronization controller determines, based on a sub-synchronous frequency band voltage signal output by the adaptive adjustment filter and an initial voltage signal, an output phase angle signal required for the pulse width modulation signal to control operation of the converter.

Through the solutions of the embodiments of this application, the damping controller can be engaged in the operation of the energy storage converter series compensation system when the activation condition is satisfied, to perform analyzing and controlling based on the voltage signal and the initial voltage signal of the capacitor, enhancing the damping level of the unstable sub-synchronous resonance mode, correcting the original negative damping mode to a positive damping mode, and improving the stable operation capability of the grid-forming converter.

The damping controller of the embodiments of this application is applied in an energy storage system, and in some embodiments, it can be applied in an energy storage converter series compensation system between the energy storage module (which may be an energy storage battery pack) of the energy storage system and the alternating current grid. Considering that GFL converters typically do not exhibit SSR instability phenomenon, the energy storage converter series compensation system referred to in the embodiments of this application includes a GFM converter-based energy storage converter series compensation system.

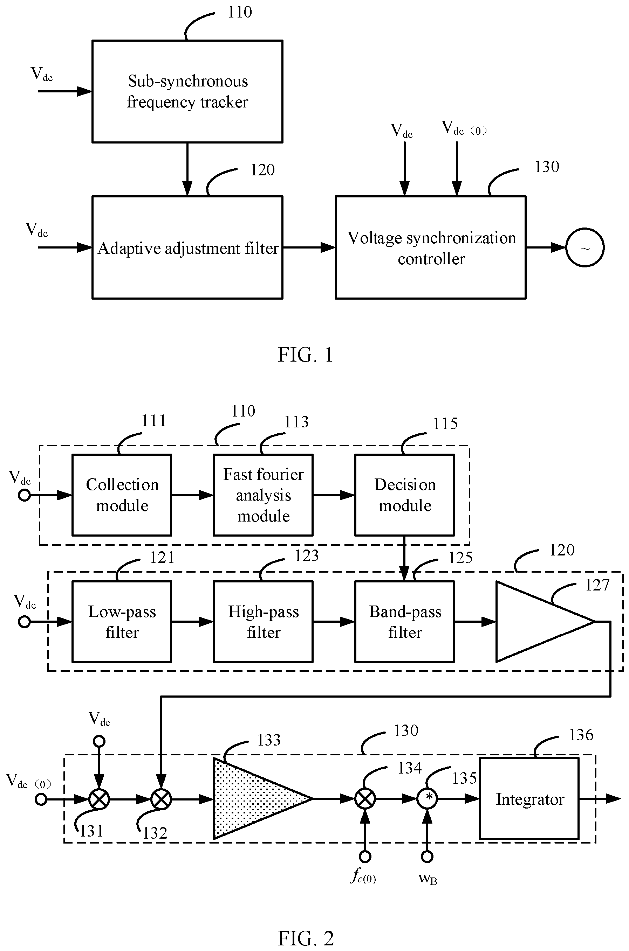

Referring to FIG. 1, an embodiment of this application provides a damping controller including a sub-synchronous frequency tracker 110, an adaptive adjustment filter 120, and a voltage synchronization controller 130. The sub-synchronous frequency tracker 110 is configured to acquire a voltage signal of a capacitor disposed between an energy storage battery pack and a converter of an energy storage converter series compensation system, and to activate the adaptive adjustment filter 120 when it is determined based on the voltage signal that an activation condition is satisfied. The adaptive adjustment filter 120 is connected to the sub-synchronous frequency tracker 110, and configured to receive the voltage signal and to perform filtering adjustment on the voltage signal when activated, outputting a sub-synchronous frequency band voltage signal. The voltage synchronization controller 130 is connected to the adaptive adjustment filter 120 and the converter, and configured to receive an initial voltage signal and to determine an output phase angle signal based on the sub-synchronous frequency band voltage signal and the initial voltage signal. The output phase angle signal is used to generate a pulse width modulation signal to control operation of the converter.

The energy storage battery pack is a battery structure formed by connecting multiple batteries for storing and releasing electrical energy, with the multiple batteries connected in series and/or parallel, without specific limitation. The energy storage converter series compensation system is a system disposed between the energy storage battery pack and the alternating current grid, converting the direct current electrical energy output by the energy storage battery pack into alternating current electrical energy suitable for the alternating current grid. The sub-synchronous frequency band voltage signal is the voltage signal within the sub-synchronous frequency band in the voltage signal. The output phase angle signal is the phase angle required for operation of the converter under damping adjustment conditions. The initial voltage signal is the theoretical voltage signal output by the capacitor when the energy storage converter series compensation system operates at rated power.

The sub-synchronous frequency tracker 110 (Sub-Synchronous Frequency Tracker, SFT) is a device that tracks and processes the voltage signal of the capacitor and determines based on the tracking and processing results whether to engage the damping controller in the operation of the energy storage converter series compensation system for damping control for the energy storage converter series compensation system. The adaptive adjustment filter 120 is a device capable of adjusting the filtering-related frequency according to actual needs and is activated under the action of the sub-synchronous frequency tracker 110. The voltage synchronization controller 130 is a device that performs synchronization control based on the initial voltage signal and the sub-synchronous frequency band voltage signal output by the adaptive adjustment filter 120 to determine the output phase angle signal required for pulse width modulation of the converter in the energy storage converter series compensation system.

During the operation of the energy storage converter series compensation system, the sub-synchronous frequency tracker 110 can collect the voltage signal of the capacitor disposed between the energy storage battery pack and the converter in real-time, track and process the voltage signal, and determine based on the tracking and processing results whether to activate the adaptive adjustment filter 120. It should be noted that the method of collecting the voltage signal by the sub-synchronous frequency tracker 110 is not unique. In some embodiments, a voltage collector may be disposed at the capacitor, with both the voltage collector and the sub-synchronous frequency tracker 110 connected to a high-voltage to low-voltage conversion board, and the sub-synchronous frequency tracker 110 acquires the voltage signal collected by the voltage collector from the high-voltage to low-voltage conversion board.

If it is determined based on the tracking and processing results that the activation condition is satisfied, it is indicated that the energy storage converter series compensation system may experience SSR instability phenomenon, and the adaptive adjustment filter 120 will be activated for further damping adjustment processing. If it is determined based on the tracking and processing results that the activation condition is not satisfied, it is indicated that the energy storage converter series compensation system will not experience SSR instability phenomenon, and there is no need to activate the adaptive adjustment filter 120 for damping adjustment; the process only needs to return to continue acquiring the voltage signal for analysis.

When the adaptive adjustment filter 120 is activated, it performs filtering processing on the input voltage signal (which can also be acquired through the voltage collector and the adaptive adjustment filter 120 both connected to the high-voltage to low-voltage conversion board) to obtain the sub-synchronous frequency band voltage signal, which is transmitted to the voltage synchronization controller 130. At the voltage synchronization controller 130, active power synchronization control is performed by combining the sub-synchronous frequency band voltage signal and the initial voltage signal, ultimately obtaining the output phase angle signal. By modulating and analyzing this output phase angle signal, the pulse width modulation signal required for the converter after damping adjustment can be determined, and the on-off operation of the converter is controlled using the analyzed pulse width modulation signal, thereby altering the damping of the energy storage converter series compensation system. This enhances the damping level of the unstable sub-synchronous resonance mode, correcting the original negative damping mode to a positive damping mode, and improving the stable operation capability of the grid-forming converter.

The above damping controller can acquire the voltage signal of the capacitor disposed between the energy storage battery pack and the converter of the energy storage converter series compensation system and determine based on this signal whether the activation condition is satisfied. When the activation condition is satisfied, the adaptive adjustment filter 120 is activated to enable the damping controller to participate in the operation of the energy storage converter series compensation system. Subsequently, the voltage synchronization controller 130 determines, based on the sub-synchronous frequency band voltage signal output by the adaptive adjustment filter 120 and the initial voltage signal, the output phase angle signal required for the pulse width modulation signal to control operation of the converter. Through the above solution, the damping controller can be engaged in the operation of the energy storage converter series compensation system when the activation condition is satisfied, enhancing the damping level of the unstable sub-synchronous resonance mode, correcting the original negative damping mode to a positive damping mode, and improving the stable operation capability of the grid-forming converter.

Referring to FIG. 2, in some embodiments, the sub-synchronous frequency tracker 110 includes a collection module 111, a fast Fourier analysis module 113, and a decision module 115 connected in sequence. The collection module 111 is configured to acquire the voltage signal, and the decision module 115 is further connected to the adaptive adjustment filter 120.

The collection module 111 is a module that samples the voltage signal input to the sub-synchronous frequency tracker 110. The fast Fourier analysis module 113 is a module that performs fast Fourier analysis on the input sampled signal to determine relevant characteristic parameters in the sampled signal, for example, performing analysis to obtain the sampled signal frequency, sampled signal amplitude, and the like, without specific limitation. The decision module 115 is a module that determines whether the activation condition is satisfied to activate the adaptive adjustment filter 120, which may be a comparator or the like, without specific limitation.

It should be noted that the specific type of the collection module 111 is not unique, as long as it can accurately collect voltage signals over a period of time. For example, in some embodiments, the collection module 111 includes a sliding rectangular collection module. In practical scenarios, the voltage signal *v_{dc}* carries broadband oscillation information of the energy storage converter series compensation system, including low-frequency oscillations, sub-synchronous oscillations, super-synchronous oscillations, high-frequency oscillations, and the like. The rectangular window module collects the fluctuations of the voltage signal *v_{dc}* in the time window from time *t* to *t* + *Δt* through real-time sliding sampling, providing the basis for subsequent signal processing.

The fast Fourier analysis module 113 denotes the sampled signal as *x*(*n*)*,* with the sampling time window *Δt = Nₛ*/*fₛ,* where *Nₛ* is the sampling point, and *fₛ* is the sampling frequency. Thus, the collected signal can be re-expressed as *X*(*k*):
$X \left(k\right) = {\sum }_{n = 0}^{{N}_{s} - 1} x \left(n\right) {e}^{- j \left(\frac{2 π}{{N}_{s}}\right) nk} , \left(k=1,…,100\right)$

Based on the above equation, relevant characteristic parameters in the sampled signal can be obtained, such as:
$\left\{\begin{matrix}{A}_{i} = \frac{2 \sqrt{ℜ {\left(X\left(k\right)\right)}^{2} + ℑ {\left(X\left(k\right)\right)}^{2}}}{{N}_{s}} \\ {f}_{i} = \left(k-1\right) / Δt / {N}_{s} \\ {ϕ}_{i} = arctan \left(\frac{ℑ \left(X\left(k\right)\right)}{ℜ \left(X\left(k\right)\right)}\right) \times \frac{180}{π}\end{matrix}\right.$ where *Aᵢ* represents the collected signal amplitude, *fᵢ* represents the collected signal frequency, *ϕᵢ* represents the collected signal phase, 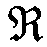 (*X*(*k*)) represents the real part of the collected signal, 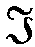 (*X*(*k*)) represents the imaginary part of the collected signal, and *Nₛ* represents the number of sampling points.

Ultimately, based on the online fast Fourier analysis results, the decision module 115 determines based on the input signal whether to activate the adaptive adjustment filter 120. When the adaptive adjustment filter 120 is activated, the voltage synchronization controller 130 can perform synchronization control by combining the sub-synchronous frequency band voltage signal output by the adaptive adjustment filter 120, thereby altering the damping of the energy storage converter series compensation system to achieve sub-synchronous resonance suppression. When the adaptive adjustment filter 120 is not activated, the voltage synchronization controller 130 can directly perform synchronization control based on the voltage signal.

In the above solution, the sub-synchronous frequency tracker 110 includes a collection module 111, a fast Fourier analysis module 113, and a decision module 115. By collecting the voltage signal and performing fast Fourier analysis, the analysis results are used to determine whether to activate the adaptive adjustment filter 120, achieving relatively high tracking accuracy.

Still referring to FIG. 2, in some embodiments, the adaptive adjustment filter 120 includes a low-pass filter 121, a high-pass filter 123, a band-pass filter 125, and a gain amplifier 127 connected in sequence. The low-pass filter 121 is configured to receive the voltage signal, the band-pass filter 125 is further connected to the sub-synchronous frequency tracker 110, and the gain amplifier 127 is further connected to the voltage synchronization controller 130.

The low-pass filter 121 is a device that allows signals with frequencies below the low-pass frequency threshold to pass while blocking signals with frequencies above the low-pass frequency threshold. The high-pass filter 123 is a device that allows signals with frequencies above the high-pass frequency threshold to pass while blocking signals with frequencies below the high-pass frequency threshold. The band-pass filter 125 is a device that allows signals within a specific frequency band to pass while blocking signals outside that frequency band. The gain amplifier 127 is a device that amplifies the input signal by a certain gain factor before outputting it.

It can be understood that the method by which the low-pass filter 121 receives the voltage signal is not unique. In some embodiments, it is consistent with the method by which the sub-synchronous frequency tracker 110 acquires the voltage signal through the high-voltage to low-voltage conversion board, which will not be repeated here.

It should be noted that the solution of this embodiment requires sequential filtering through the low-pass filter 121, high-pass filter 123, and band-pass filter 125 to select signals within the sub-synchronous frequency band. The signal output by the low-pass filter 121 needs to be further filtered by the high-pass filter 123. Therefore, the low-pass frequency threshold of the low-pass filter 121 must be set greater than the high-pass frequency threshold of the high-pass filter 123, and band-pass filtering is performed again within the frequency band range defined by the low-pass filter 121 and high-pass filter 123 to obtain the signal within the sub-synchronous frequency band.

For example, in some embodiments, considering that sub-synchronous resonance generally occurs between 2 Hz and 45 Hz, the lower limit value of the band-pass frequency range of the band-pass filter 125 can be set around 2 Hz, such as 1.8 Hz, 2 Hz, or 2.2 Hz, and the upper limit value of the band-pass frequency range can be set around 45 Hz, such as 44 Hz or 46 Hz, without specific limitation. Accordingly, the low-pass frequency threshold of the low-pass filter 121 should be set greater than or equal to 45 Hz, and the high-pass frequency threshold of the high-pass filter 123 should be set less than or equal to 2 Hz.

In the solution of this embodiment, the transfer functions of the low-pass filter 121 and high-pass filter 123, *G_{L}*(*s*) and *G_{H}*(*s*), may be expressed as:
${G}_{L} \left(s\right) = \frac{{{ω}_{L}}^{2}}{{s}^{2} + {ω}_{L} s + {{ω}_{L}}^{2}}$
${G}_{H} \left(s\right) = \frac{{s}^{2}}{{s}^{2} + {ω}_{H} s + {{ω}_{H}}^{2}}$ where *ω_{L}* represents the angular frequency corresponding to the low-pass frequency threshold of the low-pass filter 121, specifically set as *ω_{L} =* 2*πfₘₐₓ,* and *ω_{L}* represents the angular frequency corresponding to the high-pass frequency threshold of the high-pass filter 123, specifically set as *ω_{L} =* 2*πfₘᵢₙ,* where *fₘᵢₙ* is the lower limit value of the band-pass frequency range, and *fₘₐₓ* is the upper limit value of the band-pass frequency range.

The transfer function *G_{bp}*(*s*) of the band-pass filter 125 may be expressed as: ${G}_{bp} \left(s\right) = \frac{{ω}_{sub} s}{{s}^{2} + {ω}_{sub} s + {{ω}_{sub}}^{2}}$, where the angular frequency (*ω_{sub}* = 2*πf_{sub} ,* and the sub-synchronous frequency *f_{sub}* (that is, the sampled signal frequency) is obtained through detection by the sub-synchronous frequency tracker 110.

In summary, by measuring the difference *Δv_{dc}* between the voltage signal and the initial voltage signal, and passing it through the low-pass, high-pass, and band-pass filter 125, the sub-synchronous frequency band component ${Δv}_{dc}^{sub}$ is obtained. After amplification by the gain amplifier 127, ${D}_{sub} {Δv}_{dc}^{sub}$ is obtained, which is further fed into the input end of the voltage synchronization controller 130 through feedforward control, achieving effective sub-synchronous resonance damping support, where *D_{sub}* is the gain of the gain amplifier 127, which can be regarded as the damping coefficient of the damping controller.

In the above solution, the adaptive adjustment filter 120 performs low-pass filtering, high-pass filtering, band-pass filtering, and gain processing on the voltage signal, thereby accurately selecting the voltage signal in the sub-synchronous frequency band, improving the accuracy of damping suppression.

Still referring to FIG. 2, in some embodiments, the voltage synchronization controller 130 includes a first subtractor 131, a second subtractor 132, a droop controller 133, a first adder 134, a multiplier 135, and an integrator 136 connected in sequence. The first subtractor 131 is further configured to receive the voltage signal, the second subtractor 132 is further connected to the adaptive adjustment filter 120, the first subtractor 131 is further configured to receive the initial voltage signal, the first adder 134 is further configured to receive a system rated frequency, and the multiplier 135 is further configured to receive a system angular frequency reference value.

The subtractor is a device that calculates the difference between two input signals at the node to obtain a difference signal. The adder is a device that adds two input signals at the node to obtain the sum of the signals. The droop controller 133 is a device that performs droop control on the input signal. The multiplier 135 is an electronic device that multiplies two independent analog signals (specifically, the system angular frequency reference value and the converter frequency in the embodiments of this application). The integrator 136 is a device that integrates the input signal over time and outputs the result.

It can be understood that the method by which the first subtractor 131 receives the voltage signal is not unique. In some embodiments, it is consistent with the method by which the sub-synchronous frequency tracker 110 acquires the voltage signal through the high-voltage to low-voltage conversion board, which will not be repeated here.

When the adaptive adjustment filter 120 is activated, the voltage signal and the initial voltage signal are subtracted at the first subtractor 131 to obtain the voltage variation *Δv_{dc}*. The voltage variation *Δv_{dc}* and the sub-synchronous frequency band voltage signal are simultaneously transmitted to the second subtractor 132 for subtraction, and the resulting difference signal is output to the droop controller 133 for droop control, outputting a frequency variation. This is added to the system rated frequency f_{c(0)} at the first adder 134 to determine the converter frequency f_{c} required by the converter. Subsequently, the converter frequency f_{c} and the system angular frequency reference value ω_{B} are simultaneously transmitted to the multiplier 135 for multiplication, and the multiplication result is output to the integrator 136 for processing, ultimately determining the output phase angle signal required by the converter.

When the adaptive adjustment filter 120 is not activated, the voltage signal and the initial voltage signal are subtracted at the first subtractor 131 to obtain the voltage variation *Δv_{dc}*. The voltage variation *Δv_{dc}* is output to the droop controller 133 for droop control, outputting a frequency variation, which is added to the system rated frequency f_{c(0)} at the first adder 134 to determine the converter frequency f_{c} required by the converter. Subsequently, the converter frequency f_{c} and the system angular frequency reference value ω_{B} are simultaneously transmitted to the multiplier 135 for multiplication, and the multiplication result is output to the integrator 136 for processing, ultimately determining the output phase angle signal required by the converter.

In the above solution, the voltage synchronization controller 130 can perform synchronization control by combining the system rated frequency, the system angular frequency reference value, the initial voltage signal, the voltage signal, and the sub-synchronous frequency band voltage signal, outputting the output phase angle signal required by the converter for damping suppression, with relatively high voltage synchronization control reliability.

In some embodiments, satisfying the activation condition includes: the collected signal frequency satisfying a preset frequency condition, and the collected signal amplitude satisfying a preset amplitude condition; where the collected signal frequency and the collected signal amplitude are determined by performing online Fourier analysis on the voltage signal.

When the decision module 115 analyzes whether the activation condition is satisfied, the analysis method varies depending on the input relevant characteristic parameters. In the solution of this embodiment, the relevant characteristic parameters include the collected signal frequency and the collected signal amplitude as an example. Correspondingly, the decision module 115 pre-stores a preset amplitude condition and a preset frequency condition, and the sampled signal frequency is compared with the preset frequency condition, while the sampled signal amplitude is compared with the preset amplitude condition. When both satisfy their respective conditions, it is considered that the activation condition is satisfied.

In the above solution, by verifying whether the collected signal frequency and the collected signal amplitude satisfy the preset frequency condition and the preset amplitude condition, respectively, whether the activation condition for the adaptive adjustment filter 120 is satisfied is determined, improving the accuracy of activation judgment through validation in both frequency and amplitude dimensions.

In some embodiments, the collected signal frequency satisfying the preset frequency condition includes: the collected signal frequency being greater than or equal to a lower limit value of a set band-pass frequency and less than or equal to an upper limit value of the set band-pass frequency.

In the solution of this embodiment, it is required to satisfy *f*ₘᵢₙ ≤ *f_{sub}* ≤ *f*ₘₐₓ to consider the collected signal frequency as satisfying the preset frequency condition, where *f*ₘᵢₙ and *fₘₐₓ* are the lower and upper limit values of the set band-pass frequency, respectively, and *f_{sub}* represents the collected signal frequency obtained from the analysis by the fast Fourier analysis module 113. The set band-pass frequency is the frequency range value corresponding to the frequency band signal allowed to pass through the band-pass filter 125 in the adaptive adjustment filter 120. For example, in some embodiments, the set band-pass frequency can be set to 2 Hz-45 Hz, with the lower limit value of the set band-pass frequency being 2 Hz and the upper limit value of the set band-pass frequency being 45 Hz.

In the above solution, when the collected signal frequency is between the upper limit value and lower limit value of the set band-pass frequency, it is considered to satisfy the preset frequency condition, achieving damping suppression within the set band-pass frequency range, thereby improving the accuracy of damping suppression.

In some embodiments, the collected signal amplitude satisfying the preset amplitude condition includes: a ratio of the collected signal amplitude to a nominal amplitude being greater than or equal to a set threshold.

The nominal amplitude is the ratio of the peak value of the effective signal to the average power of the signal. In the solution of this embodiment, it is required to satisfy $\frac{{A}_{sub}}{{A}_{nom}} \geq {T}_{set}$ to consider the collected signal amplitude as satisfying the preset amplitude condition, where *f*ₘᵢₙ and *Aₙₒₘ* are the amplitude and nominal amplitude of the sampled signal waveform, respectively, and *Tₛₑₜ* is the set threshold used for measurement when the sub-synchronous oscillation exceeds a certain range, activating the sub-synchronous resonance damping controller.

In the above solution, when the ratio of the collected signal amplitude to the nominal amplitude is greater than or equal to the set threshold, it is considered to satisfy the preset amplitude condition, achieving damping suppression when the collected signal amplitude is relatively large, thereby improving the accuracy of damping suppression.

To facilitate understanding of the technical solution of this application, a more detailed embodiment is provided below for explanation.

During the operation of the energy storage converter series compensation system, by using a high-voltage to low-voltage conversion board and a voltage collector disposed at the capacitor, the collection module 111 of the sub-synchronous frequency tracker 110 performs collection through a sliding rectangular window, obtaining a sampled signal of the voltage of the capacitor. Subsequently, the fast Fourier analysis module 113 of the sub-synchronous frequency tracker 110 performs analysis to obtain the sampled signal frequency *f_{sub}* and the sampled signal amplitude *A_{sub}*, which are transmitted to the decision module 115. The decision module 115 analyzes whether *f*ₘᵢₙ ≤ *f_{sub}* ≤ *f*ₘₐₓ and $\frac{{A}_{sub}}{{A}_{nom}} \geq {T}_{set}$ are simultaneously satisfied based on the pre-stored sampled signal nominal amplitude *Aₙₒₘ*, set threshold *Tₛₑₜ*, upper limit value *fₘₐₓ* of the set band-pass frequency, and lower limit value *fₘᵢₙ* of the set band-pass frequency.

If both conditions are satisfied, it is considered that the activation condition is satisfied, and the adaptive adjustment filter 120 will be activated, sequentially selecting the signal ${Δv}_{dc}^{sub}$ within the sub-synchronous frequency band through the low-pass filter 121, high-pass filter 123, and band-pass filter 125. After amplification by the gain amplifier 127, ${D}_{sub} {Δv}_{dc}^{sub}$ is obtained, which is further fed into the input end of the voltage synchronization controller 130 through feedforward control.

At the voltage synchronization controller 130, the voltage signal and the initial voltage signal are subtracted at the first subtractor 131 to obtain the voltage variation *Δv_{dc}*. The voltage variation *Δv_{dc}* and the sub-synchronous frequency band voltage signal ${D}_{sub} {Δv}_{dc}^{sub}$ are simultaneously transmitted to the second subtractor 132 for subtraction, and the resulting difference signal is obtained and output to the droop controller 133 for droop control, outputting a frequency variation, which is added to the system rated frequency *f*_{*c*(0)} at the first adder 134 to determine the converter frequency *f_{c}* required by the converter. Subsequently, the converter frequency *f_{c}* and the system angular frequency reference value *ω_{B}* are simultaneously transmitted to the multiplier 135 for multiplication, and the result is output to the integrator 136 for processing, ultimately determining the output phase angle signal required by the converter for controlling the generation of the pulse width modulation signal.

If it is determined that the activation condition is not satisfied, the adaptive adjustment filter 120 is disabled. The voltage signal and the initial voltage signal are subtracted at the first subtractor 131 to obtain the voltage variation *Δv_{dc}*, and the voltage variation *Δv_{dc}* is output to the droop controller 133 for droop control, outputting a frequency variation, which is added to the system rated frequency *f*_{*c*(0)} at the first adder 134 to determine the converter frequency *f_{c}* required by the converter. Subsequently, the converter frequency *f_{c}* and the system angular frequency reference value *ω_{B}* are simultaneously transmitted to the multiplier 135 for multiplication, and the multiplication result is output to the integrator 136 for processing, ultimately determining the output phase angle signal required by the converter.

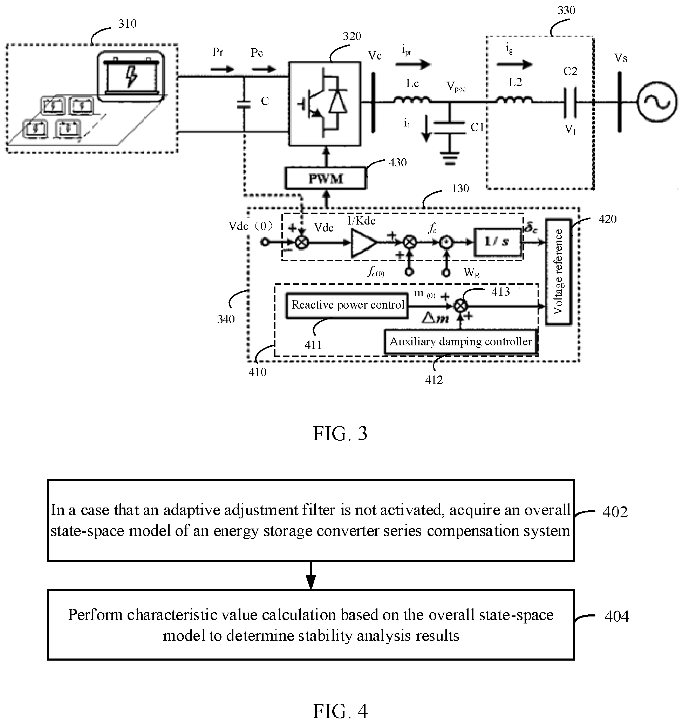

Referring to FIG. 3, this application also provides an energy storage converter series compensation system, including a capacitor C, a converter 320, a series compensation circuit 330, and the above damping controller 340 (the sub-synchronous frequency tracker 110 and adaptive adjustment filter 120 are not shown in the figure, refer to FIG. 2 for understanding). The first end and the second end of the capacitor C are both used to connect to an energy storage battery pack 310, the first end of the capacitor C is further connected to the converter 320, the second end of the capacitor C is further connected to the converter 320, the converter 320 is further connected to the damping controller 340 and the series compensation circuit 330, and the series compensation circuit 330 is used to connect to an alternating current grid.

The series compensation circuit 330 is a series compensation circuit used to improve the power factor of the energy storage converter series compensation system, stabilize the energy storage converter series compensation system, and reduce voltage fluctuations. In the embodiments of this application, the converter 320 specifically includes a grid-forming converter. In the damping controller 340, the sub-synchronous frequency tracker 110, adaptive adjustment filter 120, and voltage synchronization controller 130 can all perform voltage collection through a high-voltage to low-voltage conversion board and a voltage collector disposed at the capacitor C. The specific structure and implementation principles of the damping controller 340 are as described in the above embodiments and drawings, which will not be repeated here.

In the above energy storage converter series compensation system, the damping controller 340 is integrated at the converter 320, and the damping controller 340 can alter the damping of the energy storage converter series compensation system in the event of sub-synchronous resonance instability, improving the operational stability of the energy storage converter series compensation system.

Referring to FIG. 3, in some embodiments, the energy storage converter series compensation system further includes a reactive power control apparatus 410, a voltage reference apparatus 420, and a pulse width generator 430. The reactive power control apparatus 410 and the damping controller 340 are both connected to the voltage reference apparatus 420, and the pulse width generator 430 is connected to both the voltage reference apparatus 420 and the converter 320.

The reactive power control apparatus 410 is an apparatus in the power system that regulates and controls reactive power to maintain system stability and reliability. The voltage reference apparatus 420 is an apparatus that generates the duty cycle required for the pulse width modulation signal based on the output phase angle signal and the modulation ratio reference value output by the reactive power control apparatus 410. The pulse width generator 430 is a device that generates the pulse width modulation signal based on the input duty cycle signal.

In the energy storage converter series compensation system, the damping controller 340 performs synchronization control based on the voltage signal of the capacitor C, which can be regarded as the active power control path. To improve the operational reliability of the energy storage converter series compensation system, in addition to active power control, the solution of this embodiment also includes a reactive power control apparatus 410, and the reactive power control apparatus manages and controls the flow of reactive power.

In the solution of this embodiment, reactive power control can generate the modulation ratio reference value required for regulating the pulse width modulation signal of the converter 320. Subsequently, the modulation ratio reference value and the output phase angle signal are transmitted to the voltage reference apparatus 420, and the voltage reference apparatus 420 analyzes and determines the duty cycle required for the pulse width modulation signal. Finally, the required duty cycle is transmitted to the pulse width generator 430, and the pulse width generator 430 generates the corresponding pulse width modulation signal to control operation of the converter 320.

In the above solution, by combining the output phase angle signal and the modulation ratio reference value generated by the reactive power control apparatus 410, the voltage reference apparatus 420 and the pulse width generator 430 generate the corresponding pulse width modulation signal for the converter 320, improving the operational reliability of the converter 320.

Still referring to FIG. 3, in some embodiments, the reactive power control apparatus 410 includes a reactive power control module 411, a second adder 413, and an auxiliary damping controller 412. The reactive power control module 411 and the auxiliary damping controller 412 are both connected to the second adder 413, and the second adder 413 is connected to the voltage reference apparatus 420.

The reactive power control module 411 is a device used to implement reactive power control functions to determine the modulation ratio reference value. The auxiliary damping controller 412 is a device used to assist in damping control, outputting a modulation ratio variation value to suppress oscillations in the energy storage converter series compensation system other than sub-synchronous resonance. The reactive power control module 411 performs reactive power regulation control to obtain the modulation ratio reference value, which is added to the modulation ratio variation value output by the auxiliary damping controller 412 at the second adder 413 to determine the modulation ratio reference value.

In the above solution, by combining the modulation ratio reference value generated by the reactive power control module 411 and the modulation ratio variation value generated by the auxiliary damping controller 412 through addition, the actual modulation ratio reference value is obtained, controlling the generation of the pulse width modulation signal and effectively improving the accuracy of the modulation ratio reference value.

Referring to FIG. 3, in some embodiments, the energy storage converter series compensation system further includes a first inductor and a first capacitor. A first end of the first inductor is connected to the converter 320, a second end of the first inductor is connected to a first end of the first capacitor and the series compensation circuit 330, and a second end of the first capacitor is grounded.

In the solution of this embodiment, the first inductor and the first capacitor are also disposed between the converter 320 and the series compensation circuit 330. The first end of the first capacitor, the second end of the first inductor, and the series compensation circuit 330 form a common connection point as the grid connection point, and the voltage at this point is taken as the grid connection point voltage.

In the above solution, the converter 320 is connected to the series compensation circuit 330 through the first inductor and the first capacitor, ensuring more stable and reliable voltage transmission through the first inductor and the first capacitor, and further improving the operational reliability of the energy storage converter series compensation system.

It should be noted that the specific structure of the series compensation circuit 330 is not unique. Referring to FIG. 3, in some embodiments, the series compensation circuit 330 includes a second inductor and a second capacitor connected in series. The end of the second inductor away from the second capacitor is further connected to the converter 320, and the end of the second capacitor away from the second inductor is used to connect to the alternating current grid.

In the solution of this embodiment, the series compensation circuit 330 specifically includes a second inductor and a second capacitor connected in series, achieving the series compensation function through the second inductor and the second capacitor.

In the above solution, the series compensation circuit 330 includes a second inductor and a second capacitor, meaning that the series compensation circuit is constructed using the second inductor and the second capacitor, improving the power factor of the energy storage converter series compensation system, stabilizing the energy storage converter series compensation system, and reducing voltage fluctuations.

Referring to FIG. 4, this application also provides a stability analysis method of the energy storage converter series compensation system, including step 402 and step 404.

Step 402: In a case that the adaptive adjustment filter is not activated, acquiring an overall state-space model of the energy storage converter series compensation system.

Step 404: Perform characteristic value calculation based on the overall state-space model to determine stability analysis results.

The energy storage converter series compensation system is as described in the above embodiments and drawings. The overall state-space model is determined by linearizing based on an operating condition model, and the operating condition model is constructed based on modal analysis. The stability analysis proposed in the embodiments of this application refers to sub-synchronous resonance stability analysis. When the adaptive adjustment filter 120 is not activated, that is, the damping controller 340 is not activated, the voltage synchronization controller 130 in the damping controller 340 does not receive the sub-synchronous frequency band voltage signal for synchronization control.

In practical scenarios, the overall state-space model of the energy storage converter 320 can be pre-constructed and stored in a processor, and retrieved directly from the processor when stability analysis is needed. In other embodiments, the overall state-space model may not be pre-constructed. When stability analysis is required, the operating condition model is constructed based on modal analysis, followed by linearization processing based on the operating condition model to determine the overall state-space model. After the overall state-space model is determined, characteristic value calculation is performed on the differential-algebraic equation set represented by the overall state-space model, so as to determine, based on the resulting calculation result, the stability analysis results, that is, whether the energy storage converter series compensation system experiences sub-synchronous resonance instability, and if the sub-synchronous resonance instability phenomenon exists, to figure out what the main factors causing the sub-synchronous resonance instability are.

In the above solution, when the adaptive adjustment filter 120 is not activated and the voltage synchronization controller 130 does not receive the sub-synchronous frequency band voltage signal, modal analysis is performed on the energy storage converter series compensation system to construct the overall state-space model. By performing characteristic value calculation on the overall state-space model, the stability analysis of the energy storage converter series compensation system is achieved, obtaining stability analysis results, thereby providing data support for the theoretical analysis of sub-synchronous resonance in the energy storage converter series compensation system constructed with grid-forming converters 320.

It should be noted that the specific type of the operating condition model is not unique and the operating condition model may vary depending on the actual structure of the energy storage converter series compensation system. In some embodiments, the operating condition model includes at least one of a capacitor dynamic model, a voltage droop control model, a converter virtual power angle model, a converter alternating current/direct current voltage model, a converter dynamic model, a series compensation model, and a series compensation capacitor transient differential model.

The operating condition model may include one or more of the capacitor dynamic model, voltage droop control model, converter virtual power angle model, converter alternating current/direct current voltage model, converter dynamic model, series compensation model, and series compensation capacitor transient differential model. In some embodiments, the operating condition model includes all of the capacitor dynamic model, voltage droop control model, converter virtual power angle model, converter alternating current/direct current voltage model, converter dynamic model, series compensation model, and series compensation capacitor transient differential model.

The capacitor dynamic model is the dynamic equation of the capacitor C during operation, which may be specifically expressed as: ${Cv}_{dc} \frac{{dv}_{dc}}{dt} = {P}_{r} - {P}_{c}$, where C represents the capacitance value of the capacitor C, *v_{dc}* represents the voltage signal, *Pᵣ* represents the output power of the energy storage battery pack 310, and *P_{c}* represents the output power of the capacitor C. It can be understood that, without considering the losses of the converter 320, the power output from the capacitor C to the converter 320 should be consistent with the output power of the converter 320, that is, the output power of the converter 320 can be equivalently expressed as *P_{c}.*

The voltage droop control model is the voltage droop control equation of the voltage synchronization controller 130 in the damping controller 340, which may be specifically expressed as: *v_{dc}* - *V*_{*dc*(0)} = *K_{dc}*(*f_{c}* - *f*_{*c*(0})*,* where *v*_{*dc*(0)} represents the initial voltage signal, *K_{dc}* represents the droop coefficient of the droop controller 133 in the voltage synchronization controller 130, *f_{c}* represents the frequency of the converter 320, and *f*_{*c*(0)} represents the system rated frequency.

The converter virtual power angle model is the virtual power angle equation of the converter 320 under voltage synchronization control, which may be specifically expressed as:
$\left\{\begin{matrix}\frac{{dδ}_{c}}{dt} = {ω}_{B} \left({f}_{c}-{f}_{c \left(0\right)}\right) \\ 2 {H}_{dc} {f}_{c} \frac{{df}_{c}}{dt} = {P}_{r} - {P}_{c}\end{matrix}\right. , {H}_{dc} = \frac{{CK}_{dc} {v}_{dc \left(0\right)}}{2 {f}_{c \left(0\right)}}$ where *δ_{c}* represents the output phase angle signal, *H_{dc}* represents the virtual inertia constant, *ω_{B}* represents the system angular frequency reference value, *v*_{*dc*(0)} represents the initial voltage signal, *K_{dc}* represents the droop coefficient of the droop controller 133 in the voltage synchronization controller 130, *f_{c}* represents the frequency of the converter 320, *f*_{*c*(0)} represents the system rated frequency, *Pᵣ* represents the output power of the energy storage battery pack 310, and *P_{c}* represents the output power of the converter 320.

Subsequently, the relationship between the alternating current voltage and direct current voltage of the converter can be determined, that is, the converter alternating current/direct current voltage model, which may specifically be expressed as: *v_{c} = mV_{dc}*, where *v_{c}* represents the alternating current voltage, *v_{dc}* represents the direct current voltage signal, and *m* represents the modulation ratio reference value.

The converter dynamic model refers to the dynamic equation of the converter 320 and the parallel capacitor, and may be specifically expressed in the dq coordinate system as:
$\left\{\begin{matrix}{L}_{c} \frac{{di}_{pr}^{d}}{dt} = {v}_{c}^{d} - {v}_{pcc}^{d} + {ωL}_{c} {i}_{pr}^{q} \\ {L}_{c} \frac{{di}_{pr}^{q}}{dt} = {v}_{c}^{q} - {v}_{pcc}^{q} - {ωL}_{c} {i}_{pr}^{d}\end{matrix}\right.$
$\left\{\begin{matrix}{C}_{1} \frac{{dv}_{pcc}^{d}}{dt} = {i}_{pr}^{d} - {i}_{g}^{d} + {ωC}_{1} {v}_{pcc}^{q} \\ {C}_{1} \frac{{dv}_{pcc}^{q}}{dt} = {i}_{pr}^{q} - {i}_{g}^{q} - {ωC}_{1} {v}_{pcc}^{d}\end{matrix}\right.$ where ${i}_{pr}^{d}$ represents the d-axis component of the output current of the converter 320, ${i}_{pr}^{q}$ represents the q-axis component of the output current of the converter 320, *L_{c}* represents the inductance value of the first inductor, ${v}_{c}^{d}$ represents the d-axis component of the alternating current voltage, ${v}_{c}^{q}$ represents the q-axis component of the alternating current voltage, ${v}_{pcc}^{d}$ represents the d-axis component of the grid connection point voltage, ${v}_{pcc}^{q}$ represents the q-axis component of the grid connection point voltage, *C*₁ represents the capacitance value of the first capacitor, ${i}_{g}^{d}$ represents the d-axis component of the current input to the alternating current grid, and ${i}_{g}^{q}$ represents the q-axis component of the current input to the alternating current grid.

The series compensation model refers to the series-compensation level of the alternating current system with a series compensation apparatus, specifically expressed as: $SCL = \frac{1}{{ω}_{B}^{2} {L}_{l} {C}_{l}}$, where SCL represents the series-compensation level (Series-compensation Level), *Lₗ* represents the inductance value of the second inductor in the series compensation circuit 330, *Cₗ* represents the capacitance value of the second capacitor in the series compensation circuit 330, and *ω_{B}* represents the system angular frequency reference value.

The series compensation capacitor transient differential model refers to the electromagnetic transient differential equation of the second capacitor in the series compensation circuit 330, which may be specifically expressed as:
$\left\{\begin{matrix}{L}_{l} \frac{{di}_{g}^{d}}{dt} = {v}_{pcc}^{d} - {v}_{l}^{d} - {v}_{s}^{d} + {ωL}_{l} {i}_{g}^{q} \\ {L}_{l} \frac{{di}_{g}^{q}}{dt} = {v}_{pcc}^{q} - {v}_{l}^{q} - {v}_{s}^{q} + {ωL}_{l} {i}_{g}^{d}\end{matrix}\right.$
$\left\{\begin{matrix}{C}_{l} \frac{{dv}_{l}^{d}}{dt} = {i}_{g}^{d} + {ωC}_{l} {v}_{l}^{q} \\ {C}_{l} \frac{{dv}_{l}^{q}}{dt} = {i}_{g}^{q} - {ωC}_{l} {v}_{l}^{d}\end{matrix}\right.$ where *Lₗ* represents the inductance value of the second inductor in the series compensation circuit 330, *Cₗ* represents the capacitance value of the second capacitor in the series compensation circuit 330, ${v}_{s}^{d}$ represents the d-axis component of the equivalent voltage of the alternating current grid, ${v}_{s}^{q}$ represents the q-axis component of the equivalent voltage of the alternating current grid, ${v}_{l}^{d}$ represents the d-axis component of the voltage value of the second capacitor, ${v}_{l}^{q}$ represents the q-axis component of the voltage value of the second capacitor, ${v}_{pcc}^{d}$ represents the d-axis component of the grid connection point voltage, ${v}_{pcc}^{q}$ represents the q-axis component of the grid connection point voltage, ${i}_{g}^{d}$ represents the d-axis component of the current input to the alternating current grid, and ${i}_{g}^{q}$ represents the q-axis component of the current input to the alternating current grid.

In the above solution, one or more of the capacitor dynamic model, voltage droop control model, converter virtual power angle model, converter alternating current/direct current voltage model, converter dynamic model, series compensation model, and series compensation capacitor transient differential model are used for linearization processing to determine the overall state-space model, improving the accuracy of the overall state-space model.

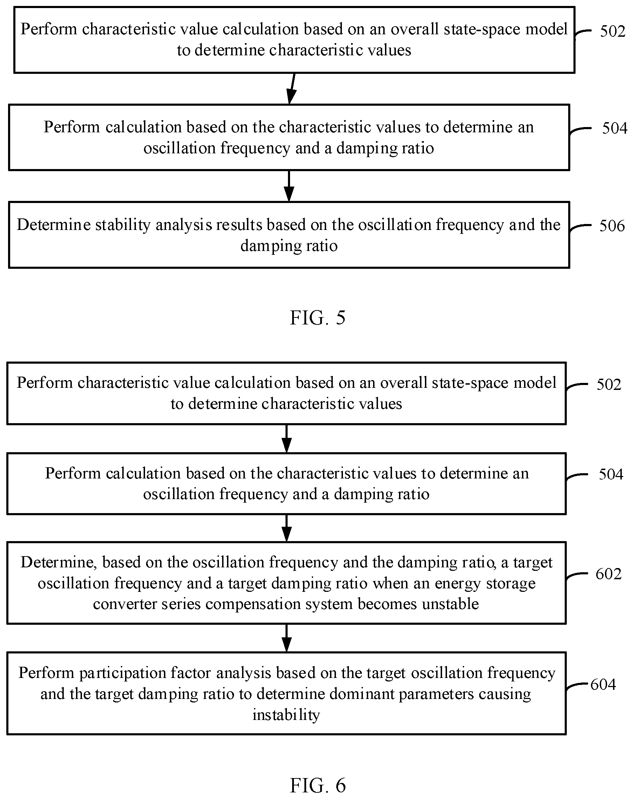

Referring to FIG. 5, in some embodiments, step 404 includes step 502, step 504, and step 506.

Step 502: Perform characteristic value calculation based on the overall state-space model to determine characteristic values.

Step 504: Perform solution based on the characteristic values to determine an oscillation frequency and a damping ratio.

Step 506: Determine stability analysis results based on the oscillation frequency and damping ratio.

In the solution of this embodiment, taking the operating condition model including all of the capacitor dynamic model, voltage droop control model, converter virtual power angle model, converter alternating current/direct current voltage model, converter dynamic model, series compensation model, and series compensation capacitor transient differential model as an example, linearization of the above models at the equilibrium point results in the following differential-algebraic equation set:
$\left.\begin{matrix}Δ \dot{x} = {A}^{˜} Δx + {B}^{˜} Δy \\ 0 = {C}^{˜} Δx + {D}^{˜} Δy\end{matrix}\right\}$ where *Ã*, *B̃*, *C̃*, and *D̃* represent the coefficient matrices after linearization, *Δy* represents the output variable matrix, and *Δx* represents the state variable matrix, including 10 variables, and may be expressed as:
$Δx = \left[{Δv}_{dc}, {Δδ}_{c}, {Δi}_{pr}^{d}, {Δi}_{pr}^{q}, {Δv}_{pcc}^{d}, {Δv}_{pcc}^{q}, {Δi}_{g}^{d}, {Δi}_{g}^{q}, {Δv}_{l}^{d}, {Δv}_{l}^{q}\right]$

Subsequently, characteristic value calculation is performed on the system, with the droop coefficient *K_{dc}* set to 41.7 (per-unit value) and the series-compensation level SCL set to 68%. The calculated characteristic values, oscillation frequencies, and damping ratios are shown in the table below:

| Mode | Characteristic value | Oscillation frequency (Hz) | Damping ratio |
|---|---|---|---|
| *λ*_{1,2} | ±*j*1985.9 | 316.06 | 0 |
| *λ*_{3,4} | ±*j*1358.1 | 216.14 | 0 |
| *λ*_{5,6} | ±*j*525.1 | 83.57 | 0 |
| *λ*_{7,8} | -3.5±*j*44.8 | 7.13 | 7.79% |
| *λ*_{9,10} | 0.2±*j*101.9 | 16.22 | -0.20% |

From the table, it can be clearly observed that the energy storage converter series compensation system has 10 characteristic values corresponding to different oscillation modes. The oscillation frequencies range from 7.13 Hz to 316.06 Hz, representing high-frequency oscillation modes (316.06 Hz, 216.14 Hz), super-synchronous oscillation modes (83.57 Hz), sub-synchronous oscillation modes (16.22 Hz), and low-frequency oscillation modes (7.13 Hz). Most oscillation modes in the table are stable, but notably, there is an unstable mode *λ*_{9,10} = 0.2 ± *j*101.9, with a real part of the characteristic values being positive and an imaginary part having an oscillation frequency of 101.9 rad (16.22 Hz), belonging to the sub-synchronous oscillation mode. Based on the established model and characteristic value calculation, an important phenomenon is identified: the energy storage converter series compensation system with a grid-forming converter 320 also exhibits SSR instability phenomenon.

In the above solution, characteristic values are obtained by performing characteristic value calculation based on the overall state-space model, and the oscillation frequency and damping ratio calculated from the characteristic values are used to verify the occurrence of sub-synchronous resonance phenomenon in the energy storage converter series compensation system, offering advantages of high accuracy in stability analysis.

Referring to FIG. 6, in some embodiments, step 506 includes step 602 and step 604.

Step 602: Determine, based on the oscillation frequency and damping ratio, a target oscillation frequency and a target damping ratio when the energy storage converter series compensation system becomes unstable.

Step 604: Perform participation factor analysis based on the target oscillation frequency and target damping ratio to determine dominant parameters causing instability.

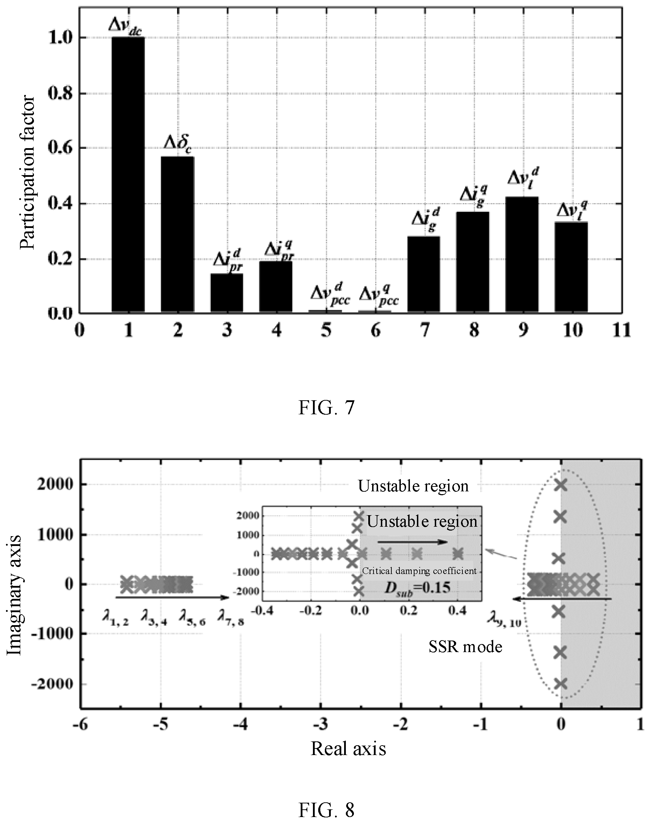

Taking the above table as an example, to identify the dominant system components causing SSR instability in the energy storage converter series compensation system, participation factor analysis is performed for the unstable mode *λ*_{9*,* 10}, as shown in FIG. 7. In FIG. 7, the horizontal axis represents the order of state variables, and the vertical axis represents the normalized participation factor values. From FIG. 7, it can be seen that the nine state variables *Δv_{dc}*, *Δδ_{c}*, ${Δv}_{l}^{d} , {Δi}_{g}^{d} , {Δv}_{l}^{q} , {Δi}_{g}^{q}$ have relatively high participation in the unstable mode. Specifically, the two state variables with the highest participation, *Δv_{dc}* and *Δδ_{c}*, are strongly related to the voltage synchronization controller 130 in FIG. 7, while the four state variables with the next highest participation, ${v}_{l}^{d} , {Δi}_{g}^{d} , {Δv}_{l}^{q} , {Δi}_{g}^{q}$, are strongly related to the dynamics of the series compensation circuit 330 of the alternating current grid in FIG. 7. From the perspective of the dominant dynamic components of the system, this novel SSR instability phenomenon is caused by the interaction between the voltage synchronization controller 130 of the converter 320 and the series compensation circuit 330, with significant energy exchange between the two dominant components in the sub-synchronous frequency band, ultimately manifesting as instability in the output power of the energy storage system.

In the above solution, based on the oscillation frequency and damping ratio obtained through calculation for each characteristic, the target oscillation frequency and target damping ratio when the energy storage converter series compensation system experiences sub-synchronous resonance (that is, instability) are identified. Further participation factor analysis is conducted to identify the main factors causing sub-synchronous resonance, providing a theoretical basis for the construction of the damping controller 340.

Further, to verify the effectiveness of the proposed damping controller 340, with the droop coefficient *K_{dc}* set to 41.7 and the series-compensation level SCL set to 68%, the system dynamic equations of the damping controller 340 are added to the system state-space model, and the characteristic values are recalculated under the same operating condition, as shown in the table below, with the damping coefficient *D_{sub}* set to 0.25:

| Mode | Characteristic value | Oscillation frequency (Hz) | Damping ratio |
|---|---|---|---|
| *λ*_{1,2} | -5.5±*j*1985.9 | 316.06 | 0.28% |
| *λ*_{3,4} | -5.4±*j*1358.1 | 216.14 | 0.40% |
| *λ*_{5,6} | -4.5±*j*525.1 | 83.57 | 0.86% |
| *λ*_{7,8} | -5±*j*44.8 | 7.13 | 11.1% |
| ***λ*_{9,10}** | **-0.4±*j*100.**6 | 16.01 | 0.398% |

From the table, it can be observed that after the damping controller 340 of the embodiments of this application is integrated, the damping ratios of all oscillation modes of the energy storage converter series compensation system are significantly improved compared to the previous table. In particular, for the characteristic value λ_9,10 with sub-synchronous instability, after the proposed damping controller 340 is integrated, the real part of the characteristic value becomes negative, and the damping ratio increases to 0.398%, fully verifying the effectiveness of the proposed damping controller 340.

To further illustrate the impact of the damping coefficient *D_{sub}* of the damping controller 340 on SSR instability, root locus analysis is performed based on the state-space method, as shown in FIG. 8, where *D_{sub}* varies from 0.1 to 0.3. Due to the negative damping effect of the SSR instability in the studied system, the damping coefficient cannot arbitrarily stabilize the unstable mode of the system. When *D_{sub}* increases from 0.1 to 0.3, the real part of the characteristic value of the SSR unstable mode moves from the right to the left, transitioning the system from the unstable right half-plane to the stable left half-plane. In particular, the critical damping coefficient *D_{sub}* of the system is 0.15.

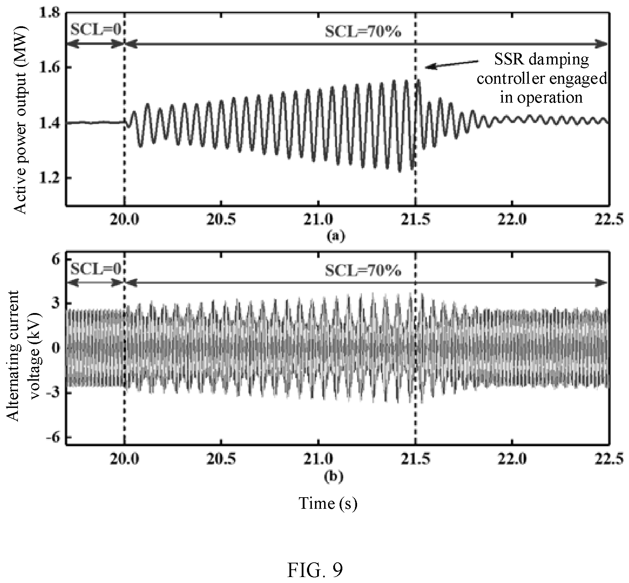

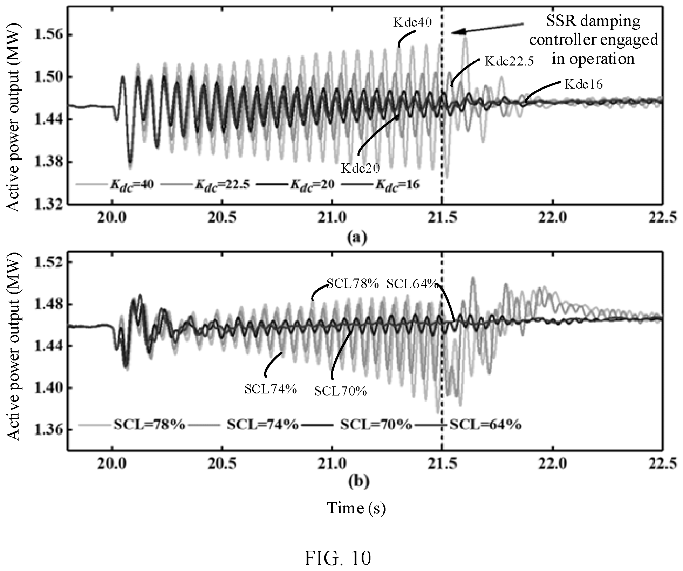

To verify the theoretical calculation results of the characteristic value calculation and root locus analysis, and to fully reflect the dynamic response characteristics of the proposed damping controller 340, FIG. 9 and FIG. 10 respectively show the time-domain response of SSR oscillation and the system time-domain response under different operating parameters after the proposed control scheme is implemented.

In FIG. 9, the system disturbance is set as follows: at t = 20s (seconds), the energy storage converter series compensation system engages the series compensation circuit 330, with SCL increasing abruptly from 0 to 70%, and the droop coefficient *K_{dc}* set to 40. The damping controller 340 is engaged at t = 21.5s, with the damping coefficient *D_{sub}* set to 0.25. From FIG. 9, it can be observed that when the system SCL increases, the output power of the converter 320 exhibits divergent SSR oscillation phenomenon, and the three-phase alternating current voltage also shows distortion in the sub-synchronous frequency band. However, after the damping controller 340 is engaged, the active power output by the converter 320 rapidly converges in a short time, returning to a new stable equilibrium point, and the sub-synchronous distortion of the three-phase alternating current voltage of the converter also quickly disappears, returning to normal power frequency operation. The above electromagnetic transient time-domain simulation results fully demonstrate that the damping controller 340 of the embodiments of this application can significantly enhance the damping level of the SSR unstable mode, correcting the original negative damping mode to a positive damping mode, and greatly improving the stable operation capability of the grid-forming energy storage converter 320.

To verify the adaptability and robustness of the damping controller 340 under multiple operating conditions, FIG. 10 shows the dynamic response characteristics of the system under different voltage droop coefficients *K_{dc}* and different series compensation degrees SCL, with the damping coefficient *D_{sub}* set to 0.25. From FIG. 10, it can be seen that under a wide range of *K_{dc}* fluctuations (16-40) and SCL (64%-78%), the proposed control scheme can fully perform its SSR suppression function. After the system experiences divergent SSR oscillation, engaging the damping controller 340 can quickly restore the system to a normal stable operating state. The simulation results are highly consistent with the theoretical calculation analysis results, further fully verifying the effectiveness, adaptability, and robustness of the proposed scheme.

This application further provides an energy storage system, including an energy storage battery pack and the above energy storage converter series compensation system.

The energy storage converter series compensation system is as described in the above embodiments and drawings, which will not be repeated here. In the above energy storage system, a damping controller 340 is disposed in the energy storage converter series compensation system between the energy storage battery pack 310 and the alternating current grid, capable of acquiring the voltage signal of the capacitor C disposed between the energy storage battery pack 310 and the converter 320 of the energy storage converter series compensation system and determining, based on this signal, whether the activation condition is satisfied. When the activation condition is satisfied, the adaptive adjustment filter 120 is activated to enable the damping controller 340 to participate in the operation of the energy storage converter series compensation system. Subsequently, the voltage synchronization controller 130 determines, based on the sub-synchronous frequency band voltage signal output by the adaptive adjustment filter 120 and the initial voltage signal, the output phase angle signal required for the pulse width modulation signal to control operation of the converter 320. Through the above solution, the damping controller 340 can be engaged in the operation of the energy storage converter series compensation system when the activation condition is satisfied, enhancing the damping level of the unstable sub-synchronous resonance mode, correcting the original negative damping mode to a positive damping mode, and improving the stable operation capability of the grid-forming converter 320.

Finally, it should be noted that the above embodiments are only used to illustrate the technical solutions of this application and not to limit them. Although this application has been described in detail with reference to the foregoing embodiments, those skilled in the art should understand that they can still modify the technical solutions described in the foregoing embodiments or make equivalent substitutions for some or all of the technical features. Such modifications or substitutions do not cause the essence of the corresponding technical solutions to depart from the scope of the technical solutions of the embodiments of this application, and they should be included within the scope of the claims and description of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A damping controller, comprising:
a sub-synchronous frequency tracker, configured to acquire a voltage signal of a capacitor disposed between an energy storage battery pack and a converter of an energy storage converter series compensation system, and to activate an adaptive adjustment filter when it is determined based on the voltage signal that an activation condition is satisfied;
an adaptive adjustment filter, connected to the sub-synchronous frequency tracker, and configured to receive the voltage signal and to perform filtering adjustment on the voltage signal when activated, outputting a sub-synchronous frequency band voltage signal; and
a voltage synchronization controller, connected to the adaptive adjustment filter and the converter, and configured to receive an initial voltage signal and to determine an output phase angle signal based on the sub-synchronous frequency band voltage signal and the initial voltage signal; wherein the output phase angle signal is used to generate a pulse width modulation signal to control operation of the converter.

2. The damping controller according to claim 1, wherein the sub-synchronous frequency tracker comprises a collection module, a fast Fourier analysis module, and a decision module connected in sequence, the collection module being configured to acquire the voltage signal, and the decision module being further connected to the adaptive adjustment filter.

3. The damping controller according to claim 1 or 2, wherein the adaptive adjustment filter comprises a low-pass filter, a high-pass filter, a band-pass filter, and a gain amplifier connected in sequence, the low-pass filter being configured to receive the voltage signal, the band-pass filter being further connected to the sub-synchronous frequency tracker, and the gain amplifier being further connected to the voltage synchronization controller.

4. The damping controller according to any one of claims 1 to 3, wherein the voltage synchronization controller comprises a first subtractor, a second subtractor, a droop controller, a first adder, a multiplier, and an integrator connected in sequence, the first subtractor being further configured to receive the voltage signal, the second subtractor being further connected to the adaptive adjustment filter, the first subtractor being further configured to receive the initial voltage signal, the first adder being further configured to receive a system rated frequency, and the multiplier being further configured to receive a system angular frequency reference value.

5. The damping controller according to any one of claims 1 to 4, wherein satisfying the activation condition comprises: the collected signal frequency satisfying a preset frequency condition, and the collected signal amplitude satisfying a preset amplitude condition; wherein the collected signal frequency and the collected signal amplitude are determined by performing online Fourier analysis on the voltage signal.

6. The damping controller according to claim 5, wherein the collected signal frequency satisfying the preset frequency condition comprises: the collected signal frequency being greater than or equal to a lower limit value of a set band-pass frequency and less than or equal to an upper limit value of the set band-pass frequency.

7. The damping controller according to claim 5, wherein the collected signal amplitude satisfying the preset amplitude condition comprises: a ratio of the collected signal amplitude to a nominal amplitude being greater than or equal to a set threshold.

8. An energy storage converter series compensation system, comprising a capacitor, a converter, a series compensation circuit, and the damping controller according to any one of claims 1 to 7, the first end and the second end of the capacitor being both used to connect to an energy storage battery pack, the first end of the capacitor being further connected to the converter, the second end of the capacitor being further connected to the converter, the converter being further connected to the damping controller and the series compensation circuit, and the series compensation circuit being used to connect to an alternating current grid.

9. The energy storage converter series compensation system according to claim 8, wherein the energy storage converter series compensation system further comprises a reactive power control apparatus, a voltage reference apparatus, and a pulse width generator, the reactive power control apparatus and the damping controller being both connected to the voltage reference apparatus, and the pulse width generator being connected to both the voltage reference apparatus and the converter.

10. The energy storage converter series compensation system according to claim 9, wherein the reactive power control apparatus comprises a reactive power control module, a second adder, and an auxiliary damping controller, the reactive power control module and the auxiliary damping controller being both connected to the second adder, and the second adder being connected to the voltage reference apparatus.

11. The energy storage converter series compensation system according to any one of claims 8 to 10, wherein the energy storage converter series compensation system further comprises a first inductor and a first capacitor, a first end of the first inductor being connected to the converter, a second end of the first inductor being connected to a first end of the first capacitor and the series compensation circuit, and a second end of the first capacitor being grounded.

12. The energy storage converter series compensation system according to any one of claims 8 to 11, wherein the series compensation circuit comprises a second inductor and a second capacitor connected in series, an end of the second inductor away from the second capacitor being further connected to the converter, and an end of the second capacitor away from the second inductor being used to connect to the alternating current grid.

13. A stability analysis method of the energy storage converter series compensation system according to any one of claims 8 to 12, comprising:
in a case that the adaptive adjustment filter is not activated, acquiring an overall state-space model of the energy storage converter series compensation system; wherein the overall state-space model is determined by linearizing based on an operating condition model, and the operating condition model is constructed based on modal analysis; and
performing characteristic value calculation based on the overall state-space model to determine stability analysis results.

14. The stability analysis method according to claim 13, wherein the operating condition model comprises at least one of a capacitor dynamic model, a voltage droop control model, a converter virtual power angle model, a converter alternating current/direct current voltage model, a converter dynamic model, a series compensation model, and a series compensation capacitor transient differential model.

15. The stability analysis method according to claim 13 or 14, wherein the performing characteristic value calculation based on the overall state-space model to determine stability analysis results comprises:
performing characteristic value calculation based on the overall state-space model to determine characteristic values;
performing calculation based on the characteristic values to determine an oscillation frequency and a damping ratio; and
determining the stability analysis results based on the oscillation frequency and the damping ratio.

16. The stability analysis method according to claim 15, wherein the determining the stability analysis results based on the oscillation frequency and the damping ratio comprises:
determining, based on the oscillation frequency and the damping ratio, a target oscillation frequency and a target damping ratio when the energy storage converter series compensation system becomes unstable; and
performing participation factor analysis based on the target oscillation frequency and the target damping ratio to determine dominant parameters causing instability.

17. An energy storage system, comprising an energy storage battery pack and the energy storage converter series compensation system according to any one of claims 8 to 12.
